# EUROPEAN PATENT SPECIFICATION

(11) **EP 2 486 700 B1**
(45) Date of publication and mention of the grant of the patent: **06.02.2019**
(21) Application number: 09850292.5
(22) Date of filing: 06.10.2009
(51) Int. Cl.: H04L 12/28, H04L 29/06, H04L 29/08, H04W 12/06

(54) **CONTROLLING EXTERNAL NETWORK-MEDIA ON A LOCAL NETWORK-UE USING AN EXTERNAL NETWORK-CONNECTED UE**
STEUERUNG EXTERNER NETZWERKMEDIEN AUF EINEM BENUTZERGERÄT EINES LOKALEN NETZWERKES MIT AN EIN EXTERNES NETZWERK ANGESCHLOSSENEM BENUTZERGERÄT
CONTRÔLE DE CONTENU MULTIMÉDIA DE RÉSEAU EXTERNE SUR UN ÉQUIPEMENT UTILISATEUR DE RÉSEAU LOCAL À L'AIDE D'UN ÉQUIPEMENT UTILISATEUR CONNECTÉ AU RÉSEAU EXTERNE

(43) Date of publication of application: 15.08.2012
(73) Proprietor: Telefonaktiebolaget LM Ericsson (publ), 164 83 Stockholm (SE)
(72) Inventor: WOXBLOM, Mikael, S-12542 Älvsjö (SE); HÄRWELL, Olof, S-11847 Stockholm (SE); ZALOSHNJA, Farjola, S-16974 Solna (SE)
(74) Representative: Zacco Sweden AB
(86) International application number: PCT/SE2009/051109
(87) International publication number: WO 2011/043704

(56) References cited:
- EP-A2- 2 000 915
- WO-A1-2008/023934
- US-A1- 2004 088 731
- US-A1- 2005 108 320
- US-A1- 2009 092 133

## Description

### TECHNICAL FIELD

The present invention relates to a method for a media aggregating node, for a virtual control node of a local network and for an external network-connected UE, of handling external network-media on a local network-UE, as well as to the media aggregating node, the virtual control node of the local network, and to the external network-connectable UE.

### BACKGROUND

A local network, e.g. a home network or an office network, may comprise several connected consumer electronic devices, e.g. personal computers, mobile phones, set-top-boxes and gaming consoles. Electronic devices within a local network can be adapted to communicate with each other e.g. according to DLNA (Digital Living Network Alliance) standard, which allows consumer electronic devices to communicate and share media content with each other, thereby enabling e.g. access of media files residing e.g. on a PC directly on a TV within the e.g. a DLNA home network, without a complicated configuration process.

A DLNA-compatible device is able to communicate with other DLNA-compatible devices within the DLNA network via the Universal Plug and Play (UPnP), which is a network protocol that is capable of establishing communication between DLNA-compatible devices within a DLNA network, without any configuration. By means of the UPnP, a DLNA device is able to e.g. discover and address other available DLNA devices within a DLNA network, and receive a description of their capabilities.

The DLNA compatible devices within a DLNA network are typically of different types, based on their function in the media distribution and rendering, and the types involve a DMS (Digital Media Storage/Server), a DMP (Digital Media Player), a DMR (Digital Media Renderer), and a DMC (Digital Media Controller). A DMS may be e.g. a PC (Personal Computer) or a NAS (Network Attached Storage), and it is a device that stores media content and makes it available to a wired and/or wireless networked DMP or DMR. A DMP may be e.g. a TV, a stereo, a game console, or a mobile phone, and is a device that finds content on a DMS and provides playback and rendering capabilities. Further, a DMC is a device that locates content on a DMS and plays it on a DMR, and a DMC may be e.g. a PDA (Personal Digital Assistant) or a mobile phone. Finally, a DMR is a device that plays content received from a DMC and it may be a TV, an audio/video receiver, a video display or remote speakers.

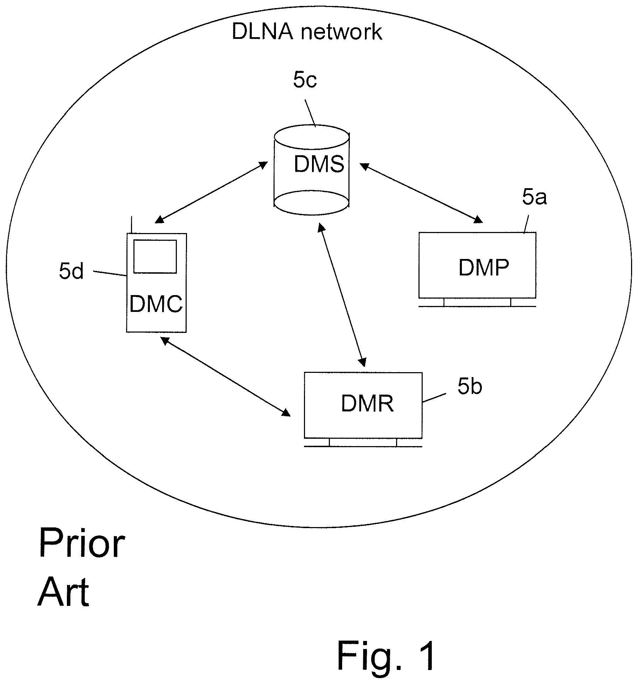

Figure 1 illustrates a conventional DLNA network comprising four DLNA compatible devices, i.e. a DMP 5a, a DMR 5b, a DMS 5c and a DMC 5d. The DMC 5d is able to obtain a file structure from the DMS, and send a specific URL to DMR, the URL received from DMS file structure. The DMR 5b is able to connect to the specified URL, which in this case is the DMS 5c itself. Further, the DMP 5s is also able to obtain a file structure from DMS, and play a link given in the DMS file structure.

A DLNA network may also comprise various other DLNA compatible devices, such as e.g. a Digital Media Printer (DMPr), a Mobile Digital Media Uploader (M-DMU), a Mobile Digital Media Donwloader (M-DMD), a Mobile Network Connectivity Function (M-NCF), and Media Interoperability Unit (MIU).

A drawback with the DLNA is that the user-friendly setup mechanism leads to a decreased security, due to the lack of a default authentication mechanism.

Further, even though the amount of media content that is available on-demand e.g. on the Internet is increasing, the media exchange in a DLNA network is limited to the local devices within the network and to pre-stored media content, according to the UPnP architecture. Thus, access to the Internet, as well as to other external networks, is limited within a DLNA network, and external network-media content has to be downloaded and stored locally on a NAS or PC, in order to be accessible on a DLNA compatible TV or radio within the DLNA network.

EP 2000915 describes methods and apparatuses with which it is possible to view content provided by an external server outside a home network, such as an IPTV service, by using an existing DLNA device. WO 2008023934 relates to a method for home network devices, which allow a user carrying a mobile device to remotely access various home network devices, from outside the home, thus streaming data.

Another drawback is the limited user interfaces capabilities in the UPnP, since a UPnP user interface can only be based on the file directory structure available via the DMS, and the metadata is limited to what can be derived from the actual files.

Thus, it is still presents a problem to enable an end-user to handle external network-media content, e.g. Internet media, in a local network, e.g. in a DLNA network, without downloading and storing the content locally.

### SUMMARY

The object of the present invention is to address the problem outlined above, and this object and others are achieved by the method and the arrangement according to the appended independent claims, and by the embodiments according to the dependent claims.

According to one aspect, the invention provides a method for a media aggregating node as described in claim 1.

The media aggregating node may receive a trigger from the external network-connected UE to continuously forward updated presence information to said external-network UE, or return updated presence information regarding local network-UEs to the external network-connected UE, in response to a request. The information regarding external network-media may further be obtained by the media aggregating node from one or more pre-selected content providers associated with said user. According to a second aspect, the invention provides a method for a virtual control node as described in claim 5.

According to a third aspect, the invention provides a method for an external network-connected UE as described in claim 7.

According to a fourth aspect, the invention provides a media aggregating node as described in claim 11.

The media aggregating node may further comprise means for communicating with a content data sub-node for obtaining information regarding external network-media from one or more pre-selected content providers, which are stored in the media aggregating node in association with a user.

According to a fifth aspect, the invention provides an external network-connectable UE as described in claim 14.

The external network-connectable UE may further comprise a display for displaying the received information regarding external network-media and local network-UEs, and user input means for initiating a sending of the login information and of the control command.

The device for communicating with a media aggregating node is further arranged to send a request for updates, and receive updated presence information regarding local network-UEs in return, and the information is forwarded from the virtual control node.

The local network may be a DLNA-network, and the local network-UEs DLNA-compatible. Further, the external network may be the Internet, and the external network-connectable UE connectable to the Internet.

An advantage with the present invention is that the external network-connected UE is able to act as a custom-optimized navigation client, without the restrictions imposed on the devices of the local network. Further, the external network-media files do not have to be downloaded locally prior to playing, but can be streamed on-demand directly to the local network-UEs.

### BRIEF DESCRIPTION OF THE DRAWINGS

The present invention will now be described in more detail, and with reference to the accompanying drawings, in which:
- Figure 1 schematically illustrates a conventional DLNA home network;
- Figure 2 is a block diagram schematically illustrating a local network, in particular a DLNA network, comprising a Virtual Control node, which is connected to a Media Aggregating node, and an external network-connected UE for controlling external network-media content e.g. a DMR within the DLNA network, according to an exemplary embodiment of the invention;
- Figure 3 is a signalling diagram illustrating an Internet-connected UE controlling Internet-media content in a DLNA compatible device within a DLNA network, according to an exemplary embodiment of the invention;
- Figure 4 is a flow diagram showing an external network-connected UE controlling external network-media content in a local network-compatible UE;
- Figure 5 is a flow diagram showing a media aggregating node handling external network-media content in a local network-UE;
- Figure 6 is a flow diagram showing a virtual control node handling external network-media content in a local network-UE;
- Figure 7 illustrated schematically an exemplary external-network-connectable UE, according to this invention;
- Figure 8 illustrated schematically an exemplary Media Aggregating node and an exemplary Virtual Control node, according to this invention.

### DETAILED DESCRIPTION

In the following description, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it is apparent to one skilled in the art that the present invention may be practised in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

In the following, the term **local network-UE** (User Equipment) is defined as a device that is capable of operating in a local network and communicating with the other devices in the local network, e.g. in a DLNA network. The term **external network** is defined as another network than the local network, and the term **external network-connectable UE** or **external network-connected UE** is defined as a device that is capable of communicating with this external network. According to a preferred embodiment of the invention, the external network corresponds to the Internet, but this invention is not limited thereto.

Conventionally, a DLNA network comprises one or more DMS (Digital Media Storage/Server) for storing media content, and the available media content can be presented to a user on a DMC (Digital Media Controller), typically in the form of tree structure. Thereafter, a user-selected media content, such as video- or audio-media or an image, can be made available by the user to be played or rendered on a DMP (Digital Media Player) or on a DMR (Digital Media Renderer).

However, according to this invention, an external-network-connected UE (User Equipment), such as e.g. an Internet-connected mobile phone or a PC located outside the local network, is used for controlling and navigating media content hosted on said external network via a media aggregating node, and for pushing the external network-media directly to a local network-compatible UE, e.g. to a DLNA-compatible PC, TV or radio, via a virtual control node of the local network. The media aggregating node comprises media servers, e.g. for authenticating users logged in to the UE and users logged in to the virtual control node of the local network, and the virtual control node controls and communicates with the local network-compliant devices of the local network. The external network-connected UE communicates with the media aggregating node, which, in turn, communicates with the virtual control node of the local network. Thereby, the external network-connected UE is able to function as a custom-optimized navigation client, without the restrictions imposed e.g. by the DLNA and the UPnP. Further, the external network-media files can be streamed on-demand to the local network-UEs, and do not have to be downloaded locally prior to playing.

In an exemplary use-case according to an embodiment of the present invention, according to which the local network is a DLNA network, and the external network is the Internet, a user is logged in on an Internet-connected UE, such as e.g. a mobile phone or a PC. Thereafter, the user sends a request to the media aggregating node for information regarding e.g. available and popular radio news programs from a pre-selected Internet-media content provider. In response, the user receives a list comprising short descriptions, thumbnails and various additional metadata, provided by the Internet-media content provider via the content data-node and the media aggregating node. The user sends a selection of a particular news program to play, and receives a list of available and suitable devices within the DLNA network in return. This list is obtained by the virtual control node within the DLNA network, and forwarded to the user via the media aggregating node to the DLNA network. The user selects e.g. a DLNA-compatible radio located in the living room, and sends a control command to the media aggregating node indicating the selected news program and the selected radio in the living room, and the news program is immediately played on said radio in his living room. Further, the user is able to change volume, stop and resume playing by sending further control commands from said Internet-connected UE.

Thus, the present invention is implemented by means of a Media aggregating node (MA), a Virtual control node (VC), and of an external network-connectable UE, e.g. an Internet-connectable UE (IC UE), as described below:
A media aggregating node, e.g. a Media Aggregator, comprises media servers that are responsible for authenticating the user, for processing all requests and presence messages, for storing data and making the user profile available, and for handling media and device metadata to be displayed on the external network-connected UE. The media aggregating node is able to communicate with the external network-connected UE, with the external network-media content providers via a content data sub-node, and with the virtual control node of a local network, e.g. a DLNA network.

A virtual control-node is located within a local network and acts e.g. as a DMC (Digital Media Controller) in a DLNA network for communicating presence and control messages to the local network-compatible UEs within the local network. The virtual control node communicates with the UEs within the local network (e.g. according to the UPnP), and with the media aggregating node. According to an exemplary implementation, the virtual control node communicates with the media aggregating node via a Home Gateway, and could be co-located with the Home Gateway node.

An external network-connectable UE, e.g. a PC or a mobile phone, is capable of displaying available external network-media content and available and suitable local network-compatible UEs within the local network to a user, thereby enabling the user to select a external network-media content and an available local network-compatible UE, and send a control command, e.g. to start playing the selected media content on the selected local network -compatible UE within the local network.

Other nodes that are involved in the implementation of the present invention are the following:
A content data-node owned by the Internet-media content providers, for publishing the available media titles and their respective URL's, by communicating with the media aggregating node.

A streaming server-node for providing a media stream to the local network-UEs.

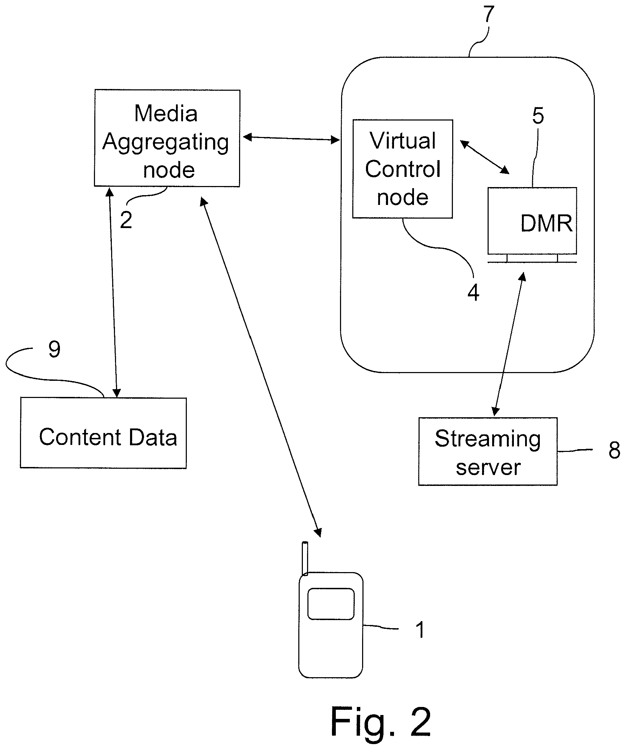

The above-described nodes are all illustrated in Figure 2, which is a block diagram schematically illustrating a DLNA network 7 comprising a Virtual Control node 4 and a DMR (Digital Media Renderer) 5. The Virtual Control node is communicating with a Media Aggregating node 2, e.g. via a Home Gateway (not illustrated in the figure), and the Media Aggregating node is communicating with a Internet-connected UE 1 outside the DLNA network, and enabling the UE to control Internet media content in the DMR within the DLNA, the media stream provided to the DMR by a streaming server 8. The Media Aggregating node is further communicating with a content data-node 9 in order to obtain available media titles and their respective URLs.

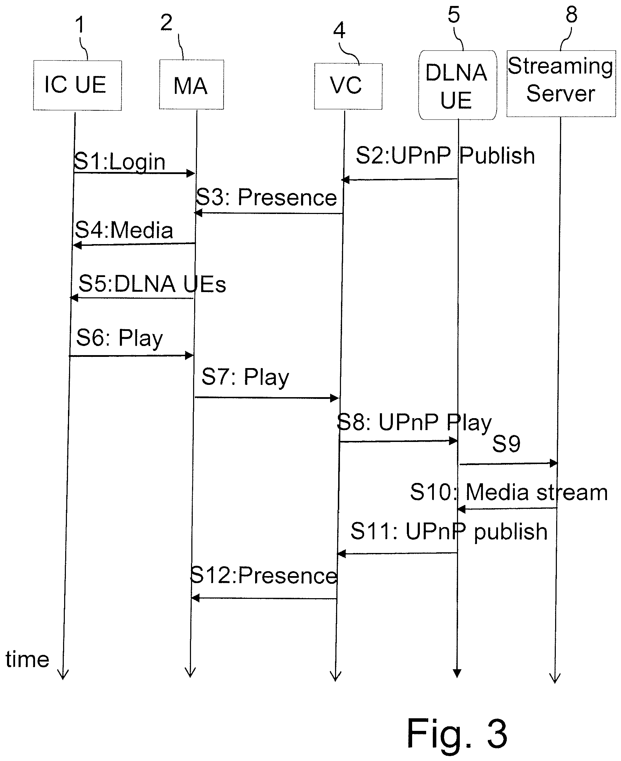

Figure 3 is a signalling diagram illustrating how an Internet-connected UE 1 controls Internet-media content in a DLNA UE 5, according to an exemplary embodiment of the invention.

In signal S1, the IC-UE 1 logs in to the MA 2 (media aggregating node) by sending user name and password. In S2, the DLNA UE sends a UPnP Publish to the VC 4 comprising presence information, e.g. that it is available. The VC, in turn, forwards the presence information to the MA, in S3. In signal S4, the MA sends information regarding Internet media content to the IC UE, after receiving a request from the IC UE, and the Internet media content-information has been obtained by the MA from a content-provider via a content data-node (not illustrated in the diagram). Further, in S5, the MA sends information regarding available and suitable DLNA UEs to the IC UE, after receiving a request, and further having determined that the logged in user is also logged in/registered in the VC.

Using the received information, the user is able to select an Internet media content and a DLNA UE, and to further select a control command to send to the MA, in signal S6, using the IC UE, the control command being e.g. a play-command or a stop-command. This control command is forwarded by the MA to the VC, in S7, and forwarded, in S8, as a corresponding UPnP Play command to the selected DLNA UE. In S9 and S10, the DLNA UE obtains the media stream associated with the selected Internet media content from the streaming server, and issues a UPnP Publish with the play status for the VC, in S11. The VC, in turn, forwards the updated presence information to the MA, in signal S12.

The media aggregating node 2, according to this invention, receives status and presence information from the local network-UEs of the local network via the virtual control node 4. When a user is logged in to an external network-connected UE 1 outside the local network 7, the media aggregating node receives a user login from the external network-connected UE. The media aggregating node authenticates the user, and sends information regarding external network-media to the external network-connected UE, in response to a request. Further, it determines whether the user is also logged in to a virtual control node, with which the media aggregating node is communicating. If so, the media aggregating node will send information regarding available and suitable local network-UEs to the external network-connected UE, in response to a request. When the media aggregating node receives a user-selected control command associated with a selected external network-media and a selected local network-UE from the external network-connected UE, it will forward the control command to the virtual control node.

According to different exemplary embodiments of this invention, a control command is directed e.g. to start playing or stop playing a selected media session, to change the volume of a played session, or to resume playing a media session after a pause.

According to a further exemplary embodiment, the media aggregating node receives a request for updated presence information regarding the local network-UEs from the external network connected UE, e.g. after receiving a control command, and sends updated presence information in return. According to an alternative embodiment, the media aggregating node receives a trigger when the external network-connected UE logs in to continuously forward any updated presence information to the external network-connected UE.

According to an exemplary embodiment of the invention, said information regarding external network-media is obtained by the media aggregating node from one or more pre-selected content providers stored in the media aggregating node associated with said user.

The virtual control node 4 controls and communicates with the local network-compliant devices 5 of the local network, e.g. using the UPnP in case the local network is a DLNA network, and receives presence information to forward to the media aggregating node 2, which has authenticated the logged-in user. The virtual control node will receive a user-selected control command from the media aggregating node 2, the control command originating in the external network-connected UE 1 and associated with a user-selected external network-media content and with a user-selected local network-UE. The virtual control node will send a corresponding local network-adapted control command to the selected local network-UE, such that a received play-command associated with a selected media session and with a selected local network UE will cause said media session to be played on said local network UE.

The external network-connected UE 1 communicates with the media aggregating node 2, and sends user login information to the media aggregating node, and receives information regarding external network-media from the media aggregating node, in response to a request. In case the user is also logged in to a virtual control node of a local network, the external network-connected UE will receive information regarding available and suitable local network-UEs from the media aggregating node, in response to a request, and this presence information is forwarded from said virtual control node. Next, the external network-connected UE will send a user-selected control command associated with selected external network-media and with a selected local network-UE to the media aggregating node, to be forwarded to the virtual control node.

According to a further exemplary embodiment, the external-network-connected UE sends a request for updated presence information regarding the local network-UEs to the media aggregating node, e.g. after sending a control command, and receives the updated presence information in return. According to an alternative embodiment, the external network-connected UE triggers the media aggregating node at log-in to continuously forward any updated presence information to the external network-connected UE.

According to a preferred embodiment, said external network is the Internet, and the external network-connected UE is connected to the Internet.

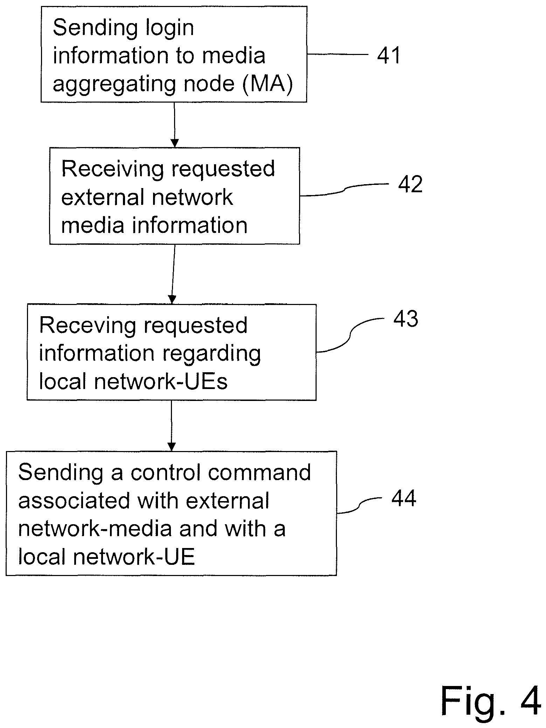

Figure 4 is a flow diagram showing an external network-connected UE controlling external network-media content in a local network-compatible UE, according to the invention, by communicating with a media aggregating node.

The external-network connected UE sends login information to the media aggregating node, in step 41, and will receive requested information regarding external network media content, in step 42. Next, the UE will receive requested information regarding local network-UEs in step 43, e.g. a list of the local network-UEs that are available and suitable for a specific media content. Now, the external network-connected UE is able to send a user-selected control command to the media aggregating node, in step 44, e.g. to start playing a selected media session on a selected local network-UE.

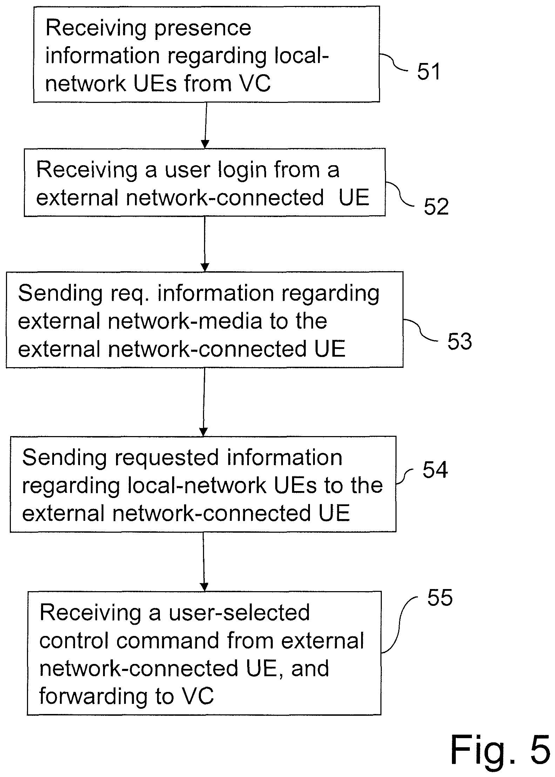

Figure 5 is a flow diagram showing a media aggregating node handling external network-media content in a local network-UE, according to the invention, by communication with a virtual control node of the local network, and with an external-network connected UE that is controlling the media content from the outside of the local network.

In step 51, the media aggregating node receives presence information regarding local network-UEs from the Virtual Control node. In step 52, a user login is received form an external network-connected UE, and the media aggregating node sends information regarding external network media-content to the external network connected UE, in step 53, after receiving a request. Further, the media aggregating node sends information regarding local network-UEs to the external network UE, in step 54, e.g. a list of local network-UEs that are available and suitable for playing a specific media content, after receiving a request, and after having determined that the logged-in user is also logged-in to the local network. Finally, in step 55, the media aggregating node receives a user-selected control command from the external network-connected UE, selecting an external network media content, and a local network-UE, and forwards the control command to the Virtual control node.

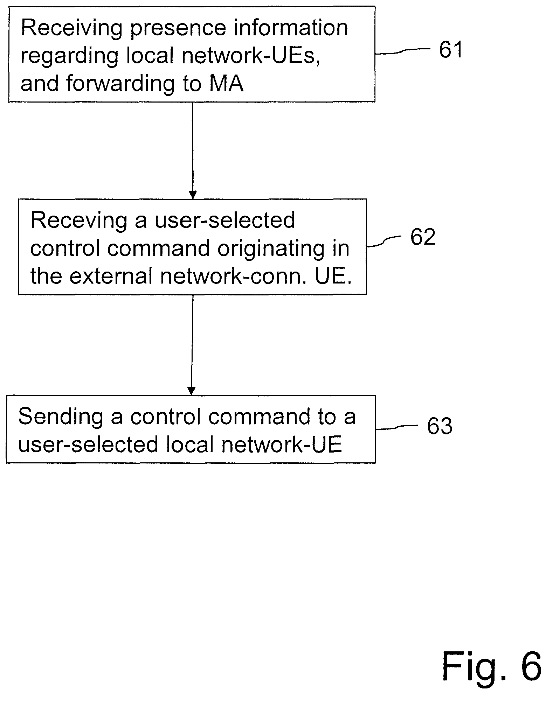

Figure 6 is a flow diagram showing a Virtual Control node of a local network handling external network-media content in a local network-UE, according to the invention, the Virtual Control node communicating with a media aggregating node and with the local network-UEs of the local network,

In step 61, the Virtual Control node receives presence and status information from local network-UEs, and forwards the information to the media aggregating node. In step 62, the Virtual Control node receives a user-selected control command from the media aggregating node, the control command originating in an external network-connected UE handled by a user that is also logged in to the Virtual control node. Further, the control command, e.g. a play-command, is associated with a user-selected external network-media content and with a user-selected local network-UE of the local network. Next, in step 63, the Virtual Control node sends a corresponding local network-adapted control command to the selected local network-UE, e.g. a UPnP Play, in case the local network is a DLNA network.

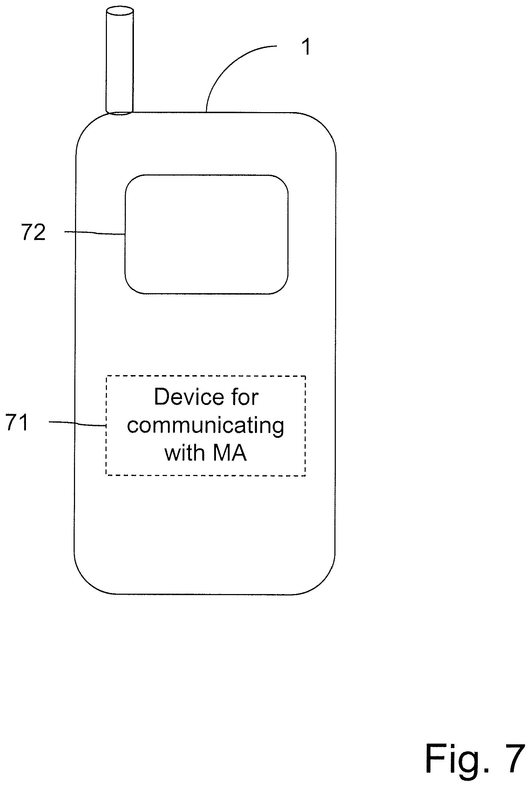

Figure 7 illustrated schematically an exemplary external-network-connectable UE, according to this invention, e.g. a PC (Personal Computer) or a mobile phone, adapted to communicate with the external network, e.g. the Internet. The UE is provided with a device 71 for communicating with a media aggregating node, as well as with a display 72 for displaying available external network-media content and available local network-compatible UEs within the local network to a user in order to enable the user to select a media content and an available local network-UE. The UE is further provided with a suitable user input means (not illustrated in the figure) for initiating the UE to send log-in information and control commands to the media aggregating node, e.g. to start playing the selected media content on the selected local network UE.

The device 71 for communication with the media aggregating node further comprises a sender and a receiver. The sender is further arranged to send user login information to the media aggregating node, and to send a user-selected control command associated with user-selected external network-media and with a user-selected local network-UE to the media aggregating node. The receiver is arranged to receive information regarding external network-media from the media aggregating node, in response to a request, and information regarding available local network-UEs from the media aggregating node, in response to a request, wherein said information regarding local network-UEs is forwarded from a virtual control node, to which said user is logged in.

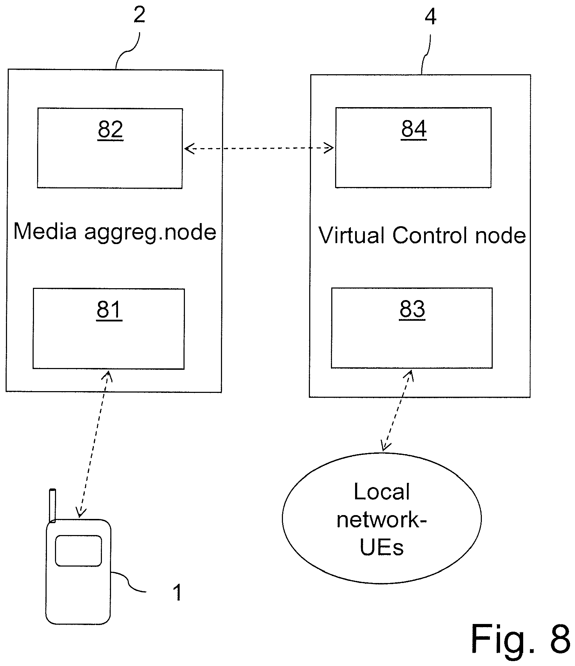

Figure 8 illustrated schematically an exemplary Media Aggregating node 2 and an exemplary Virtual Control node 4, according to this invention.

The media aggregating node 2 and comprises media servers that are responsible for authenticating the user, for processing all requests and presence messages, for storing data and making the user profile available, and for handling media and device metadata to be displayed on a external-network connected UE. The media aggregating node comprises a device 81 for communicating with the external network-connected UE 1, said device comprising a receiver arranged to receive a login from a user and a user-selected control command associated with user-selected external network-media and with a user-selected local network-UE, as well as a sender arranged to send information regarding external network-media and presence information regarding available and suitable local network-UEs to the user, in response to received requests. The media aggregating node is further provided with a device 82 for communication with the virtual control node 4, said device comprising a receiver arranged to receive presence information regarding local network-UEs, and a sender arranged to forward the received user-selected control-command, wherein the user is logged in to the virtual control node.

A media aggregating node according to a further exemplary embodiment is provided with means for storing pre-selected content providers associated with a user, as well as with a device for communicating with a content data sub-node for obtaining information regarding external network-media from said content providers.

The virtual control node 4 act as a controller of the local network, e.g. as a DMC (Digital Media Controller) of a DLNA, for communicating e.g. presence messages and control commands to the UEs within the local network. The virtual control node is provided with a device 83 for communicating with the local network UEs, the device comprising a receiver arranged to receive presence information related to the local network UEs, and a sender arranged to forward a user-selected control-command to a selected local network UE. Said control command originates in the external network-connected UE, and is associated with user-selected external network-media and with a user-selected local network-UE, wherein said user is logged in to the virtual control node and to the external network-connected UE. The Virtual control node is further provided with a device 84 for communicating with the media aggregating node 2, the device comprising a sender arranged forward said received presence information, and a receiver arranged to receive said user-selected control-command.

It should be noted that the external network-connectable UE 1, the Media Aggregating node 2 and the Virtual Control node 4, as illustrated in figures 7 and 8, may be implemented by physical or logical entities using software functioning in conjunction with a programmed microprocessor or general purpose computer, and/or using an application specific integrated circuit (ASIC).

Further, the above mentioned and described embodiments are only given as examples and should not be limiting to the present invention. Other solutions, uses, objectives, and functions within the scope of the invention as claimed in the accompanying patent claims should be apparent for the person skilled in the art.

### ABBREVIATIONS

- DLNA: Digital Living Network Alliance
- DLNA UE: DLNA-compliant User Equipment
- DMC: Digital Media Controller
- DMP: Digital Media Player
- DMS: Digital Media Storage/Server
- DMR: Digital Media Renderer
- UPnP: Universal Plug and Play
- MA: Media Aggregating node
- VC: Virtual Control node
- IC UE: Internet-connected User Equipment

## Claims

1. A method for a media aggregating node (2) of handling external network-media in a local network-User Equipment, UE, (5), the external network-media being controlled by an external network-connected UE (1) outside the local network and connected to the media aggregating node, said media aggregating node being also outside of said local network and of said external network, the local network comprising a virtual control node (4) connected to the media aggregating node, the method **characterized by** the media aggregating node performing the steps of:
- Receiving (51) presence information regarding local network-UEs from the virtual control node;
- Receiving (52) a user login from the external network-connected UE, from a user logged in to the virtual control node;
- Sending (53) information, requested from said external network-connected UE, regarding external network-media, to the external network-connected UE;
- Sending (54) information, requested from said external network-connected UE, regarding local network-UEs to the external network-connected UE;
- Receiving (55) a user-selected control command, associated with user-selected external network-media and with a user-selected local network-UE, from the external network-connected UE, and forwarding it to the virtual control node.

2. A method according to claim 1, wherein the media aggregating node receives a trigger from the external network-connected UE to continuously forward updated presence information to said external-network UE.

3. A method according to claim 1, **characterized by** the media aggregating node performing the additional steps of:
- Receiving a request for updates from the external network-connected-UE, and
- Returning updated presence information regarding local network-UEs.

4. A method according to any of the preceding claims, wherein said information regarding external network-media is obtained by the media aggregating node from one or more pre-selected content providers associated with said user.

5. A method for a virtual control node (4) in a local network 7 of handling external network-media in a local network-User Equipment, UE, (5), the external network-media being controlled by an external network-connected UE (1) outside the local network and connected to a media aggregating node (2), the media aggregating node being connected to the virtual control node, the method **characterized by** the virtual control node performing the steps of:
- Receiving (61) presence information from the local network UEs, and forwarding it to the media aggregating node;
- Receiving (62) a user-selected control command originating in the external network-connected UE via the media aggregating node, wherein the control command is associated with user-selected external network-media and with a user-selected local network-UE, and wherein the user is logged in to the virtual control node and to the external network-connected UE;
- Sending (63) a corresponding control command to the user-selected local network-UE.

6. A method for a virtual control node in a local network, according to claim 5, wherein the local network is a DLNA-network, and the local network-UEs are DLNA-compatible.

7. A method for an external network-connected User Equipment, UE, (1) of controlling external network-media in a local network-UE (5), the external network-connected UE being connected to a media aggregating node (2), which is connected to a virtual control node (4) of the local network, the method **characterized by** the external network-connected UE performing the steps of:
- Sending (41) user login information to the media aggregating node;
- Requesting and receiving (42) information regarding external network-media from the media aggregating node;
- Requesting and receiving (43) information regarding local network-UEs from the media aggregating node, said information originating in a virtual control node, to which said user is logged in, and
- Sending (44) a user-selected control command, associated with user-selected external network-media and with a user-selected local network-UE, to the media aggregating node.

8. A method according to claim 7, wherein the external network-connected UE sends a trigger to the media aggregating node to continuously forward updated presence information to the external network-connected UE.

9. A method according to claim 7, **characterized by** the external network-connected UE performing the additional steps of:
- Sending a request for updates to the media aggregating node, and
- Receiving updated presence information regarding local network UEs in return, the information forwarded from the virtual control node.

10. A method for an external network-connected UE according to any of the claims 7 - 9, wherein said external network is the Internet, and the external network-connected UE is connected to the Internet.

11. A media aggregating node (2) arranged to handle external network-media in a local network-User Equipment, UE, (5), to be controlled by an external network-connected UE (1) outside the local network and connectable to the media aggregating node, said media aggregating node being also outside of said local network and of said external network, the local network comprising a virtual control node (4) connectable to the media aggregating node, the media aggregating node **characterized in that** it comprises:
- A device (81) for communicating with the external network-connected UE, the device being arranged to:
Receive a user login from the external network-connected UE, from a user logged in to the virtual control node;
Send information, requested from said external network-connected UE, regarding external network-media;
Send information, requested from said external network-connected UE, regarding local network-UEs;
Receive, from the external network-connected UE, a user-selected control command associated with user-selected external network-media and with a user-selected local network-UE;
- A device (82) for communicating with the virtual control node, the device being arranged to:
Receive, from the virtual control node, presence information regarding local network-UEs, and
Forward the received user-selected control-command to the virtual control node,

12. A media aggregating node according to claim 11, wherein the device for communicating with the external network-connected UE is further arranged to receive a request for updates, and return updated presence information regarding local network-UEs.

13. A media aggregating node according to claim 11 or 12, further comprising means for communicating with a content data sub-node (9) for obtaining information regarding external network-media from one or more pre-selected content providers, which are stored in the media aggregating node in association with a user.

14. An external network-connectable User Equipment, UE, (1) arranged to control external network-media in a local network-UE (5) from the outside of the local network, the external network-connectable UE further being connectable to a media aggregating node (2), which is connectable to a virtual control node (4) of the local network, the external network-connectable UE **characterized in that** it comprises:
- A device (71) for communicating with a media aggregating node, the device being arranged to:
Send user login information;
Request and receive information regarding external network-media;
Request and receive information regarding local network UEs, said received information originating in the virtual control node to which said user is logged in; and
Send a user-selected control command, associated with user-selected external network-media and with a user-selected local network-UE, to the media aggregating node.

15. An external network-connectable UE according to claim 14, **characterized in that** it further comprises:
- A display (72) for displaying the received information regarding external network-media and local network-UEs;
- User input means for initiating a sending of the login information and of the control command.

16. An external network-connectable UE according to claim 14 or 15, wherein the device for communicating with a media aggregating node is further arranged to:
Send a request for updates, and receive updated presence information regarding local network-UEs in return, the information being forwarded from the virtual control node.

17. An external network-connectable UE, according to any of the claims 14 - 16, wherein the external network is the Internet, and said external network-connectable UE is arranged to be connectable to the Internet.

## Patentansprüche

1. Verfahren für einen Medienaggregationsknoten (2) zum Handhaben von externen Netzmedien in einer lokalen Netz-Benutzereinrichtung, UE, (5), wobei die externen Netzmedien durch eine externe, mit dem Netz verbundene UE (1) außerhalb des lokalen Netzes gesteuert und mit dem Medienaggregationsknoten verbunden werden, wobei der Medienaggregationsknoten auch außerhalb des lokalen Netzes und des externen Netzes liegt, wobei das lokale Netz einen virtuellen Steuerknoten (4) umfasst, der mit dem Medienaggregationsknoten verbunden ist, wobei das Verfahren **dadurch gekennzeichnet ist, dass** der Medienaggregationsknoten die folgenden Schritte durchführt:
- Empfangen (51) von Präsenzinformationen bezüglich lokaler Netz-UEs vom virtuellen Steuerknoten;
- Empfangen (52) einer Benutzeranmeldung von der externen, mit dem Netz verbundenen UE von einem in dem virtuellen Steuerknoten angemeldeten Benutzer;
- Senden (53) von von der externen, mit dem Netz verbundenen UE angeforderten Informationen bezüglich externer Netzmedien an die externe, mit dem Netz verbundene UE;
- Senden (54) von von der externen, mit dem Netz verbundenen UE angeforderten Informationen bezüglich lokaler Netz-UEs an die externe, mit dem Netz verbundene UE;
- Empfangen (55) eines vom Benutzer ausgewählten Steuerbefehls, der vom Benutzer ausgewählten, externen Netzmedien und einer vom Benutzer ausgewählten lokalen Netz-UE zugeordnet ist, von der externen, mit dem Netz verbundenen UE, und Weiterleiten desselben an den virtuellen Steuerknoten.

2. Verfahren nach Anspruch 1, wobei der Medienaggregationsknoten einen Trigger von der externen, mit dem Netz verbundenen UE empfängt, um kontinuierlich aktualisierte Präsenzinformationen an die externe Netz-UE weiterzuleiten.

3. Verfahren nach Anspruch 1, **dadurch gekennzeichnet, dass** der Medienaggregationsknoten die folgenden zusätzlichen Schritte durchführt:
- Empfangen einer Anforderung nach Aktualisierungen von der externen, mit dem Netz verbundenen UE, und
- Rückgabe aktualisierter Präsenzinformationen in Bezug auf lokale Netz-UEs.

4. Verfahren nach einem der vorstehenden Ansprüche, wobei die Informationen bezüglich externer Netzmedien durch den Medienaggregationsknoten von einem oder mehreren vorausgewählten Inhaltsanbietern erhalten werden, die dem Benutzer zugeordnet sind.

5. Verfahren für einen virtuellen Steuerknoten (4) in einem lokalen Netz (7) zum Handhaben von externen Netzmedien in einer lokalen Netz-Benutzereinrichtung, UE, (5), wobei das externe Netzmedium von einer externen, mit dem Netz verbundenen UE (1) außerhalb des lokalen Netzes gesteuert wird und mit einem Medienaggregationsknoten (2) verbunden ist, wobei der Medienaggregationsknoten mit dem virtuellen Steuerknoten verbunden ist, wobei das Verfahren **dadurch gekennzeichnet ist, dass** der virtuelle Steuerknoten folgende Schritte durchführt:
- Empfangen (61) von Präsenzinformationen von den lokalen Netz-UEs und Weiterleiten derselben an den Medienaggregationsknoten;
- Empfangen (62) eines vom Benutzer ausgewählten Steuerbefehls, der von der externen, mit dem Netz verbundenen UE stammt, über den Medienaggregationsknoten, wobei der Steuerbefehl vom Benutzer ausgewählten externen Netzmedien und einer vom Benutzer ausgewählten lokalen Netz-UE zugeordnet ist, und wobei der Benutzer in dem virtuellen Steuerknoten und in der externen, mit dem Netz verbundenen UE angemeldet ist;
- Senden (63) eines entsprechenden Steuerbefehls an die vom Benutzer ausgewählte lokale Netz-UE.

6. Verfahren für einen virtuellen Steuerknoten in einem lokalen Netz nach Anspruch 5, wobei das lokale Netz ein DLNA-Netz ist und die lokalen Netz-UEs DLNA-kompatibel sind.

7. Verfahren für eine externe, mit dem Netz verbundene Benutzereinrichtung (UE) (1) zum Steuern externer Netzmedien in einer lokalen Netz-UE (5), wobei die externe, mit dem Netz verbundene UE mit einem Medienaggregationsknoten (2) verbunden ist, der mit einem virtuellen Steuerknoten (4) des lokalen Netzes verbunden ist, wobei das Verfahren **dadurch gekennzeichnet ist, dass** die externe, mit dem Netz verbundene UE die folgenden Schritte durchführt:
- Senden (41) von Benutzer-Anmeldeinformationen an den Medienaggregationsknoten;
- Anfordern und Empfangen (42) von Informationen bezüglich externer Netzmedien vom Medienaggregationsknoten;
- Anfordern und Empfangen (43) von Informationen in Bezug auf lokale Netz-UEs vom Medienaggregationsknoten, wobei die Informationen aus einem virtuellen Steuerknoten stammen, in dem der Benutzer angemeldet ist, und
- Senden (44) eines vom Benutzer ausgewählten Steuerbefehls, der vom Benutzer ausgewählten externen Netzmedien und einer vom Benutzer ausgewählten lokalen Netz-UE zugeordnet ist, an den Medienaggregationsknoten.

8. Verfahren nach Anspruch 7, wobei die externe, mit dem Netz verbundene UE einen Trigger an den Medienaggregationsknoten sendet, um aktualisierte Präsenzinformationen kontinuierlich an die externe, mit dem Netz verbundene UE weiterzuleiten.

9. Verfahren nach Anspruch 7, **dadurch gekennzeichnet, dass** die mit dem externen Netz verbundene UE die folgenden zusätzlichen Schritte durchführt:
- Senden einer Aktualisierungsanforderung an den Medienaggregationsknoten, und
- Empfangen von aktualisierten Präsenzinformationen bezüglich der lokalen Netz-UEs im Gegenzug, wobei die Informationen vom virtuellen Steuerknoten aus weitergeleitet werden.

10. Verfahren für eine externe, mit dem Netz verbundene UE nach einem der Ansprüche 7 bis 9, wobei das externe Netz das Internet ist und die externe, mit dem Netz verbundene UE mit dem Internet verbunden ist.

11. Medienaggregationsknoten (2), der angeordnet ist, um externe Netzmedien in einer lokalen Netz-Benutzereinrichtung (UE) (5) zu handhaben, die von einer externen, mit dem Netz verbundenen UE (1) außerhalb des lokalen Netzes gesteuert und mit dem Medienaggregationsknoten verbindbar ist, wobei der Medienaggregationsknoten auch außerhalb des lokalen Netzes und des externen Netzes liegt, wobei das lokale Netz einen virtuellen Steuerknoten (4) umfasst, der mit dem Medienaggregationsknoten verbindbar ist, wobei der Medienaggregationsknoten **dadurch gekennzeichnet ist, dass** er Folgendes umfasst:
- eine Vorrichtung (81) zum Kommunizieren mit der externen, mit dem Netz verbundenen UE, wobei die Vorrichtung angeordnet ist zum:
Empfangen einer Benutzeranmeldung aus der externen, mit dem Netz verbundenen UE von einem in dem virtuellen Steuerknoten angemeldeten Benutzer;
Senden von Informationen, die von der externen, mit dem Netz verbundenen UE angefordert werden, bezüglich externer Netzmedien;
Senden von Informationen, die von der externen, mit dem Netz verbundenen UE angefordert werden, bezüglich lokaler Netz-UEs;
Empfangen eines vom Benutzer ausgewählten Steuerbefehls von der externen, mit dem Netz verbundenen UE, der dem vom Benutzer ausgewählten externen Netzmedium und einer vom Benutzer ausgewählten lokalen Netz-UE zugeordnet ist;
- eine Vorrichtung (82) zum Kommunizieren mit dem virtuellen Steuerknoten, wobei die Vorrichtung angeordnet ist zum:
Empfangen von Präsenzinformationen vom virtuellen Steuerknoten in Bezug auf lokale Netz-UEs, und
Weiterleiten des empfangenen, vom Benutzer ausgewählten Steuerbefehls an den virtuellen Steuerknoten,

12. Medienaggregationsknoten nach Anspruch 11, wobei die Vorrichtung zur Kommunikation mit der externen, mit dem Netz verbundenen UE ferner so angeordnet ist, dass sie eine Aktualisierungsanforderung empfängt und aktualisierte Präsenzinformationen bezüglich lokaler Netz-UEs zurückgibt.

13. Medienaggregationsknoten nach Anspruch 11 oder 12, der ferner Mittel zum Kommunizieren mit einem Inhaltsdaten-Teilknoten (9) zum Erhalten von Informationen bezüglich externer Netzmedien von einem oder mehreren vorausgewählten Inhaltsanbietern umfasst, die in dem Medienaggregationsknoten in Verbindung mit einem Benutzer gespeichert sind.

14. Externe, mit dem Netz verbindbare Benutzereinrichtung (UE) (1), die angeordnet ist, um externe Netzmedien in einer lokalen Netz-UE (5) von der Außenseite des lokalen Netzwerks aus zu steuern, wobei die externe, mit dem Netz verbindbare UE ferner mit einem Medienaggregationsknoten (2) verbindbar ist, der mit einem virtuellen Steuerknoten (4) des lokalen Netzes verbindbar ist, wobei die externe, mit dem Netz verbindbare UE **dadurch gekennzeichnet ist, dass** sie Folgendes umfasst:
- eine Vorrichtung (71) zum Kommunizieren mit einem Medienaggregationsknoten, wobei die Vorrichtung für Folgendes angeordnet ist:
Senden der Benutzer-Anmeldeinformationen;
Anfordern und Empfangen von Informationen in Bezug auf externe Netzmedien;
Anfordern und Empfangen von Informationen bezüglich lokaler Netz-UEs, wobei die empfangenen Informationen von dem virtuellen Steuerknoten stammen, in dem der Benutzer angemeldet ist; und
Senden eines vom Benutzer ausgewählten Steuerbefehls, der vom Benutzer ausgewählten, externen Netzmedien und einer vom Benutzer ausgewählten, lokalen Netz-UE zugeordnet ist, an den Medienaggregationsknoten.

15. Externe, mit dem Netz verbindbare UE nach Anspruch 14, **dadurch gekennzeichnet, dass** sie ferner Folgendes umfasst:
- eine Anzeige (72) zum Anzeigen der empfangenen Informationen in Bezug auf die externen Netzmedien und die lokalen Netz-UEs;
- Benutzereingabemittel zum Einleiten eines Sendens der Anmeldeinformationen und des Steuerbefehls.

16. Externe, mit dem Netz verbindbare UE nach Anspruch 14 oder 15, wobei die Vorrichtung zum Kommunizieren mit einem Medienaggregationsknoten ferner für Folgendes angeordnet ist:
Senden einer Aktualisierungsanforderung und Empfangen von aktualisierten Präsenzinformationen bezüglich der lokalen Netz-UEs im Gegenzug, wobei die Informationen vom virtuellen Steuerknoten aus weitergeleitet werden.

17. Externe, mit dem Netz verbindbare UE nach einem der Ansprüche 14 bis 16, wobei das externe Netz das Internet ist und die externe, mit dem Netz verbindbare UE so angeordnet ist, dass sie mit dem Internet verbindbar ist.

## Revendications

1. Procédé destiné à un noeud d'agrégation multimédia (2) de gestion d'un média de réseau externe dans un équipement utilisateur, UE, de réseau local (5), le média de réseau externe étant commandé par un UE connecté à un réseau externe (1) à l'extérieur du réseau local et connecté au noeud d'agrégation multimédia, ledit noeud d'agrégation multimédia étant également à l'extérieur dudit réseau local et dudit réseau externe, le réseau local comprenant un noeud de commande virtuel (4) connecté au noeud d'agrégation multimédia, le procédé **caractérisé par** le noeud d'agrégation multimédia mettant en oeuvre les étapes consistant à :
- Recevoir (51) des informations de présence concernant des UE de réseau local depuis le noeud de commande virtuel ;
- Recevoir (52) une connexion d'utilisateur depuis l'UE connecté à un réseau externe, depuis un utilisateur connecté au noeud de commande virtuel ;
- Envoyer (53) des informations, demandées depuis ledit UE connecté à un réseau externe, concernant un média de réseau externe, à l'UE connecté à un réseau externe ;
- Envoyer (54) des informations, demandées depuis ledit UE connecté à un réseau externe, concernant des UE de réseau local à l'UE connecté à un réseau externe ;
- Recevoir (55) une instruction de commande sélectionnée par l'utilisateur, associée à un média de réseau externe sélectionné par l'utilisateur et à un UE de réseau local sélectionné par l'utilisateur, depuis l'UE connecté à un réseau externe, et la transférer au noeud de commande virtuel.

2. Procédé selon la revendication 1, dans lequel le noeud d'agrégation multimédia reçoit un déclencheur depuis l'UE connecté à un réseau externe pour transférer de façon continue des informations de présence mises à jour audit UE de réseau externe.

3. Procédé selon la revendication 1, **caractérisé par** le noeud d'agrégation multimédia mettant en oeuvre les étapes supplémentaires consistant à :
- Recevoir une demande pour des mises à jour depuis l'UE connecté au réseau externe, et
- Renvoyer des informations de présence mises à jour concernant des UE de réseau local.

4. Procédé selon l'une quelconque des revendications précédentes, dans lequel lesdites informations concernant le média de réseau externe sont obtenues par le noeud d'agrégation multimédia depuis un ou plusieurs fournisseurs de contenu présélectionnés associés audit utilisateur.

5. Procédé destiné à un noeud de commande virtuel (4) dans un réseau local (7) de gestion de média de réseau externe dans un équipement utilisateur, UE, de réseau local (5), le média de réseau externe étant commandé par un UE connecté à un réseau externe (1) à l'extérieur du réseau local et connecté à un noeud d'agrégation multimédia (2), le noeud d'agrégation multimédia étant connecté au noeud de commande virtuel, le procédé **caractérisé par** le noeud de commande virtuel mettant en oeuvre les étapes consistant à :
- Recevoir (61) des informations de présence depuis les UE de réseau local, et les transférer au noeud d'agrégation multimédia ;
- Recevoir (62) une instruction de commande sélectionnée par l'utilisateur provenant de l'UE connecté à un réseau externe via le noeud d'agrégation multimédia, dans lequel l'instruction de commande est associée à un média de réseau externe sélectionné par l'utilisateur et à un UE de réseau local sélectionné par l'utilisateur, et dans lequel l'utilisateur est connecté au noeud de commande virtuel et à l'UE connecté à un réseau externe ;
- Envoyer (63) une instruction de commande correspondante à l'UE de réseau local sélectionné par l'utilisateur.

6. Procédé destiné à un noeud de commande virtuel dans un réseau local, selon la revendication 5, dans lequel le réseau local est un réseau DLNA, et les UE de réseau local sont compatibles avec DLNA.

7. Procédé destiné à un équipement utilisateur, UE, connecté à un réseau externe (1) de commande d'un média de réseau externe dans un UE de réseau local (5), l'UE connecté à un réseau externe étant connecté à un noeud d'agrégation multimédia (2), qui est connecté à un noeud de commande virtuel (4) du réseau local, le procédé **caractérisé par** l'UE connecté à un réseau externe mettant en oeuvre les étapes consistant à :
- Envoyer (41) des informations de connexion d'utilisateur au noeud d'agrégation multimédia ;
- Demander et recevoir (42) des informations concernant un média de réseau externe depuis le noeud d'agrégation multimédia ;
- Demander et recevoir (43) des informations concernant des UE de réseau local depuis le noeud d'agrégation multimédia, lesdites informations provenant d'un noeud de commande virtuel, auquel ledit utilisateur est connecté, et
- Envoyer (44) une instruction de commande sélectionnée par l'utilisateur, associée à un média de réseau externe sélectionné par l'utilisateur et à un UE de réseau local sélectionné par l'utilisateur, au noeud d'agrégation multimédia.

8. Procédé selon la revendication 7, dans lequel l'UE connecté à un réseau externe envoie un déclencheur au noeud d'agrégation multimédia pour transférer de façon continue des informations de présence mises à jour à l'UE connecté à un réseau externe.

9. Procédé selon la revendication 7, **caractérisé par** l'UE connecté à un réseau externe mettant en oeuvre les étapes supplémentaires consistant à :
- Envoyer une demande de mises à jour au noeud d'agrégation multimédia, et
- Recevoir des informations de présence mises à jour concernant des UE de réseau local en retour, les informations étant transférées depuis le noeud de commande virtuel.

10. Procédé destiné à un UE connecté à un réseau externe selon l'une quelconque des revendications 7 à 9, dans lequel ledit réseau externe est Internet, et l'UE connecté à un réseau externe est connecté à Internet.

11. Noeud d'agrégation multimédia (2) agencé pour gérer un média de réseau externe dans un équipement utilisateur, UE, de réseau local (5), devant être commandé par un UE connecté à un réseau externe (1) à l'extérieur du réseau local et pouvant être connecté au noeud d'agrégation multimédia, ledit noeud d'agrégation multimédia étant également à l'extérieur dudit réseau local et dudit réseau externe, le réseau local comprenant un noeud de commande virtuel (4) pouvant être connecté au noeud d'agrégation multimédia, le noeud d'agrégation multimédia **caractérisé en ce qu'**il comprend :
- Un dispositif (81) pour communiquer avec l'UE connecté à un réseau externe, le dispositif étant agencé pour :
Recevoir une connexion d'utilisateur depuis l'UE connecté à un réseau externe, depuis un utilisateur connecté au noeud de commande virtuel ;
Envoyer des informations, demandées depuis ledit UE connecté à un réseau externe, concernant un média de réseau externe ;
Envoyer des informations, demandées depuis ledit UE connecté à un réseau externe, concernant des UE de réseau local ;
Recevoir, depuis l'UE connecté à un réseau externe, une instruction de commande sélectionnée par l'utilisateur associée à un média de réseau externe sélectionné par l'utilisateur et à un UE de réseau local sélectionné par l'utilisateur ;
- Un dispositif (82) pour communiquer avec le noeud de commande virtuel, le dispositif étant agencé pour :
Recevoir, depuis le noeud de commande virtuel, des informations de présence concernant des UE de réseau local, et
Transférer l'instruction de commande sélectionnée par l'utilisateur reçue, au noeud de commande virtuel,

12. Noeud d'agrégation multimédia selon la revendication 11, dans lequel le dispositif pour communiquer avec l'UE connecté à un réseau externe est en outre agencé pour recevoir une demande de mises à jour, et renvoyer des informations de présence mises à jour concernant des UE de réseau local.

13. Noeud d'agrégation multimédia selon la revendication 11 ou 12, comprenant en outre un moyen pour communiquer avec un sous-noeud de données de contenu (9) pour obtenir des informations concernant un média de réseau externe depuis un ou plusieurs fournisseurs de contenu présélectionnés, qui sont stockés dans le noeud d'agrégation multimédia en association avec un utilisateur.

14. Équipement utilisateur, UE, pouvant être connecté à un réseau externe (1) agencé pour commander un média de réseau externe dans un UE de réseau local (5) depuis l'extérieur du réseau local, l'UE pouvant être connecté à un réseau externe pouvant en outre être connecté à un noeud d'agrégation multimédia (2), qui peut être connecté à un noeud de commande virtuel (4) du réseau local, l'UE pouvant être connecté à un réseau externe **caractérisé en ce qu'**il comprend :
- Un dispositif (71) pour communiquer avec un noeud d'agrégation multimédia, le dispositif étant agencé pour :
Envoyer des informations de connexion d'utilisateur ;
Demander et recevoir des informations concernant un média de réseau externe ;
Demander et recevoir des informations concernant des UE de réseau local, lesdites informations reçues provenant du noeud de commande virtuel auquel ledit utilisateur est connecté ; et
Envoyer une instruction de commande sélectionnée par l'utilisateur, associée à un média de réseau externe sélectionné par l'utilisateur et à un UE de réseau local sélectionné par l'utilisateur, au noeud d'agrégation multimédia.

15. UE pouvant être connecté à un réseau externe selon la revendication 14, **caractérisé en ce qu'**il comprend en outre :
- Un affichage (72) pour afficher les informations reçues concernant un média de réseau externe et des UE de réseau local ;
- Un moyen de saisie utilisateur pour déclencher un envoi des informations de connexion et de l'instruction de commande.

16. UE pouvant être connecté à un réseau externe selon la revendication 14 ou 15, dans lequel le dispositif pour communiquer avec un noeud d'agrégation multimédia est en outre agencé pour :
Envoyer une demande de mises à jour, et recevoir des informations de présence mises à jour concernant des UE de réseau local en retour, les informations étant transférées depuis le noeud de commande virtuel.

17. UE pouvant être connecté à un réseau externe, selon l'une quelconque des revendications 14 à 16, dans lequel le réseau externe est Internet, et ledit UE pouvant être connecté à un réseau externe est agencé pour pouvoir être connecté à Internet.
